Europäisches Patentamt

European Patent Office

Office européen des brevets

(11) Numéro de publication: **0 088 855**

**A1**

(12) ## DEMANDE DE BREVET EUROPEEN

(21) Numéro de dépôt: **82420033.1**

(22) Date de dépôt: **12.03.82**

(51) Int. Cl.³: **G 09 B 23/18**

(43) Date de publication de la demande:
**21.09.83 Bulletin 83/38**

(84) Etats contractants désignés:
**AT BE CH DE FR GB IT LI LU NL SE**

(71) Demandeur: **Charvolin, Patrice**
**3 rue Tupin**
**F-69002 Lyon(FR)**

(72) Inventeur: **Charvolin, Patrice**
**3 rue Tupin**
**F-69002 Lyon(FR)**

(74) Mandataire: **Maisonnier, Jean**
**28 rue Servient**
**F-69003 Lyon(FR)**

(54) **Nécessaire pour la réalisation de circuits électriques.**

(57) Une plaque (1), comportant des perforations (2) reçoit des modules de jonction (3). Ces modules (3) se composent d'une tête (4) et d'un ergot (5) pour leur fixation dans les trous (2) de la plaque (1). Sur chaque tête (4) se trouvent des connexions (6) recevant les sorties (16) des composants électroniques (15). Ces sorties (16) sont maintenues par des lamelles (7) assurant le contact électrique, et reliées entre elles.

Applications: usage pour les laboratoires ou l'enseignement.

FIG1

FIG3

EP 0 088 855 A1

Croydon Printing Company Ltd.

L'invention concerne un nécessaire pour la réalisation de circuits électriques , en particulier à l'usage des laboratoires et de l'ens.eignement.

Les circuits électriques réalisés selon les procédés habituels ne sont généralement pas la réplique exacte du schéma théorique de fonctionnement . De plus , la connexion des composants électroniques sur ces circuits étant obtenue par soudure , il n'est plus possible d'utiliser de nouveau ces composants pour d'autres circuits sans risquer de les endommager en les dessoudant.

L'invention a pour but de combler ces lacunes en réalisant un nécessaire complet pour la réalisation de circuits électriques, pratique , sans soudures, où le circuit électrique ainsi obtenu est la réplique exacte de son schéma théorique et où les composants électroniques employés sont réutilisables pour d'autres circuits.

Un nécessaire complet pour la réalisation de circuits électriques , selon l'invention , est caractérisé en ce qu'il comprend une plaque perforée et des modules de jonction s'encastrant dans les perforations de la plaque.

Suivant une autre caractéristique , la plaque comprend des trous qui peuvent être disposés en quinconce.

Suivant une autre caractéristique , les modules de jonction comportent une tête cylindrique , limitée par deux plans parallèles ; suivant l'axe de la partie cylindrique et en dessous de cette partie formant la tête se trouve un ergot formé de deux parties tronconiques et fendu en son milieu , cet ergot maintenant par frottement le module de jonction dans un des trous de la plaque.

Suivant une autre caractéristique , la tête des modules de jonction a la forme d'un parallélépipède.

Suivant une autre caractéristique ,la tête des modules de jonction comporte un réseau de connexions régulièrement espacées et placées à une distance constante du bord de la surface supérieure de la tête ( module n° II).

Suivant une autre caractéristique , les connexions précitées sont toutes reliées par un même conducteur ; ce conducteur forme une ligne continue ayant la forme du réseau de connexions (modules N° II). Suivant une autre caractéristique , la tête des modules de jonction comporte un réseau de connexsion réparties régulièrement suivant des parallèles à un des côtés de la tête,dans le cas où cette tête a la forme d'un parallélépipède ( modules n° I).

2

Suivant une autre caractéristique , les connexions préci-citées appartenant à une même parallèle à un des côtés de la tête , sont reliées par un même conducteur , ces conducteurs formant un ensemble de parallèles.

Suivant une autre caractéristique , une connexion se compose de deux lamelles fixées à un plot , par exemple par coudage , ce plot étant relié au conducteur précité . Les lamelles , le plot et la liaison plot-conducteur sont réalisés dans une matière conductrice.

Suivant une autre caractéristique , la forme des lamelles d'un connexion doit permettre une fixation correcte des composants électroniques et assurer un contact électrique entre ces composants et le plot.

Suivant une autre caractéristique de l'invention , un mo-dule se présente sous la forme d'une tête cubique en matière plastique souple , dans laquelle sont prévues plusieurs fentes rectilignes et parallèles entre elles , débouchant vers le haut , chacune d'elles contenant une barrette métallique de connexion à plusieurs pinces juxtaposées . Dans ce cas , chaque barrette est enfoncée à force dans la fente correspondante de la tête souple.

Suivant une autre caractéristique de l'invention ,l'er-got de chaque module est un tronc cylindrique ou carré , massif , réalisé en matière plastique souple , qu'on peut enfoncer dans des trous circulaires répartis sur la plaque en lignes et en colonnes.

Suivant une autre caractéristique de l'invention , la tête cubique de chaque module possède deux nervures inférieures dont l'ensemble constitue l'ergot d'encastrement , susceptible de venir s'emboîter dans une perforation carrée de la plaque , en y pénétrant d'une hauteur inférieure ou égale à lamoitié de l'épaisseur de la plaque , si bien que celle-ci peut recevoir sur ses deux faces , des modules fixés à tout emplacement voulu . Dans ce cas , si deux modules sont fixés dans une même ouverture , mais de part et d'autre de la plaque , il suffit de les traverser tous deux de part en part par une broche engagée sur chaque module dans l'une des pinces des barrettes , pour assurer la liaison électrique entre les modules des deux faces de la plaque.

Le dessin annexé , donné à titre d'exemple non limitatif permettra de mieux comprendre les caractéristiques de l'invention.

Figure 1 est une vue partielle en perspective d'un montage électrique réalisé avec le nécessaire selon l'invention.

Figure 2 est une vue partielle en perspective d'un montage et du schéma du circuit dont la réalisation est présentée sur la figure 1.

Figure 3 est une vue en perspective d'un module de jonction.

Figure 4 est une vue de dessus d'un module de jonction n° II.

Figure 5 est une vue de face d'un module de jonction n° II, section V - V ( figure 4) .

Figure 6 est une vue de droite d'une connexion , section VI - VI ( figure 4).

Figure 7 est une vue de face d'une connexion , section VII - VII ( figure 8).

Figure 8 est une vue de dessus d'un module de jonction n° I .

Figure 9 est une vue de face d'un module de jonction n° I , section IX - IX ( figure 8).

Figure 10 montre une variante de plaque de support selon l'invention , utilisable pour des schémas électroniques en double face.

Figure 11 illustre à grande échelle un détail de perspective de la figure 10.

Figures 12 et 13 montrent une variante du module de jonction n° I .

Figures 14 et 15 montrent une variante du module de jonction n° II .

Figures 16 , 17 , 18 et 19 sont des vues correspondantes pour des modules de jonction spécialement adaptés à des montages électroniques en double face.

Figure 20 est une vue éclatée montrant l'armature conductrice d'un module n° I suivant les figures 16 et 17.

Figure 21 est une vue éclatée analogue pour l'armature du module n° II suivant les figures 18 et 19.

Figure 22 montre un détail du module n° I des figures 16 , 17 et 20.

Figure 23 montre un élément de charnière selon l'invention.

Figure 24 est une coupe montrant l'assemblage de deux modules du type des figures 17 , 19 et 13 , 15 , pour un montage à double face.

Figure 25 montre une utilisation possible de l'invention , pour réaliser un montage muni d'un panneau incliné.

Figure 26 montre une autre réalisation à deux panneaux de support , dont l'un est à double face.

Figure 27 montre une variante de plaque et de modules spécialement prévue pour réaliser des montages à double face.

Figure 28 est une coupe partielle suivant XXVIII - XXVIII ( figure 27) de la plaque équipée de quatre modules , placés en vis-à-vis sur ses deux faces.

Figure 29 montre une broche utilisée pour assurer la connexion électrique entre les deux faces.

Figure 30 est une vue avec coupe partielle d'un module selon la variante des figures 27 à 29.

Figure 31 est une vue avec coupes partielles d'une des pièces métalliques munies des pinces de connexion utilisées dans la tête cubique du module de la figure 30.

Figure 32 est une vue en bout suivant la direction de la flèche XXXII (figure 31) montrant l'embouchure d'une pince de connexion. Figure 33 montre une variante de module connecteur.

Figure 34 illustre la plaque de support correspondante.

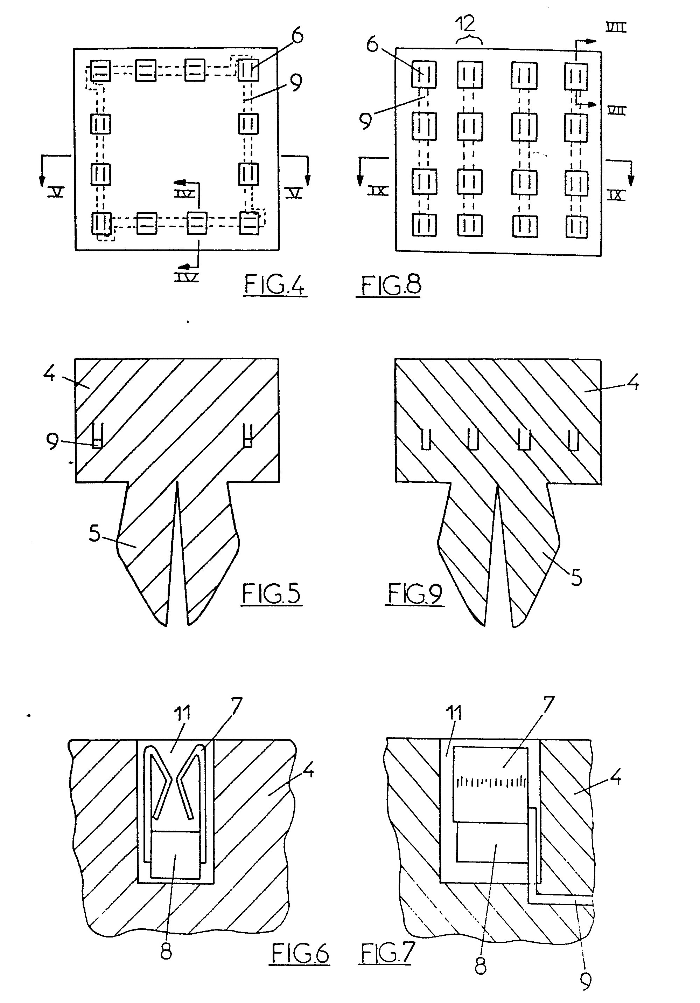

Un nécessaire selon l'invention comprend une plaque 1 , munie de perforations 2 , pouvant être réalisée en bois du type isorel , et de modules de jonction 3 qui sont de deux types : modules n° II (figures 4 et 5) et modules n° I ( figures 8 et 9).

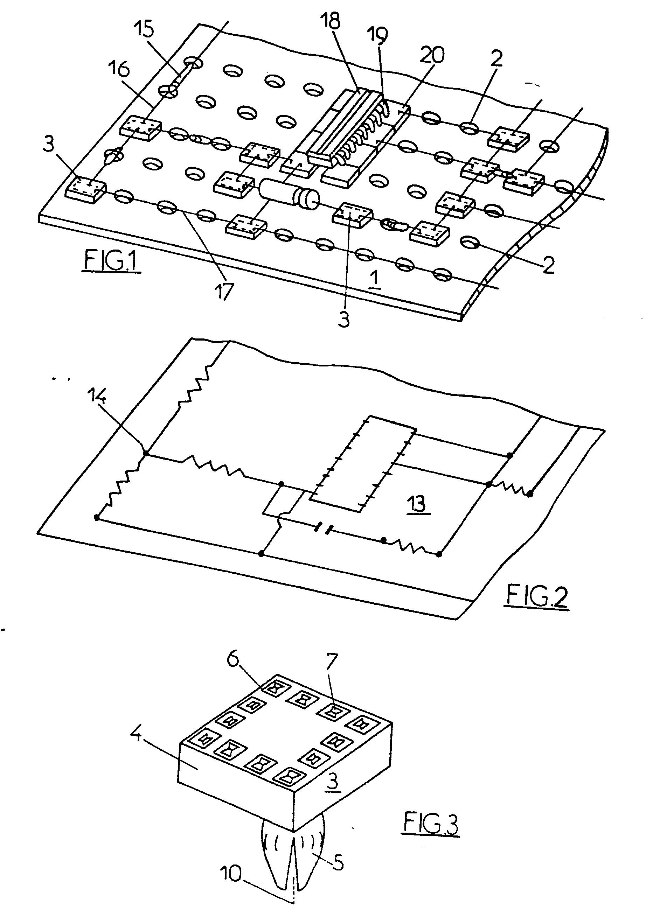

Un module de jonction 3 est formé d'une tête 4 , d' un ergot de fixation 5 fendu en 10 et de connexions 6 (figure 3).

Chaque connexion 6 se compose de deux lamelles 7 soudées à un plot 8 ; les connexions 6 sont reliées par un conducteur 9 et sont logées dans des cavités 11 de la tête 4 ( figures 6 et 7).

Les connexions des modules de jonction n° 1 sont toutes reliées par un même conducteur 9 ( figure 4) ; les connexions 6 des modules de jonction n° I sont reliées par des conducteurs 9 , de manière à former des rangées de connexions 12 indépendantes , aucun conducteur 9 ne reliant deux rangées 12 ( figure 8).

5

Le fonctionnement est le suivant :

- suivant le schéma électrique 13 , on fixe sur la plaque 1 , autant de modules de jonction 3 , qu'il y a de noeuds 14 dans le réseau électrique ;

- les modules de jonction 3 se fixent sur la plaque 1 , dans les trous 2 , par l'intermédiaire de leur ergot 5 ;

- les composants électroniques 15 sont disposés entre les différents modules de jonction 3 suivant le schéma 13 , les sorties 16 de ces composants rentrant dans les connexions 6 des modules de jonction ; le reste du câblage est réalisé par des cavaliers 17 fixés de la même manière que les composants 15 ;

- les composants électroniques du type circuits intégrés 18 sont fixés par l'intermédiaire de leurs pattes 19 à des rangées 20 de modules de jonction n° I ( figures 1 , 2 , 3) ;

- les sorties 16 des composants électroniques 15 sont bloquées entre les deux lamelles 7 des connexions 6 , de manière à obtenir une liaison assurant un contact électrique permanent entre ces deux éléments ( figures 1 et 6).

Les avantages du nécessaire pour laréalisation de circuits électriques selon l'invention sont les suivants ;

- les circuits ainsi réalisés reproduisent exactement les circuits des schémas électriques ; employés dans un laboratoire , ou dans l'enseignement , ces circuits , réalisés avec le nécessaire selon l'invention , permettent une meilleure compréhension de leur fonctionnement ;

- les noeuds des circuits étant réalisés par des connexions sans soudure , on obtient une grande facilité d'emploi ; on ne détériore pas les composants électroniques employés , qui peuvent être utilisés de nouveau pour d'autres circuits , et on peut facilement modifier le circuit réalisé ;

- les deux types de modules de jonction permettent d'utiliser toutes sortes de composants électroniques , comme par exemple , des circuits intégrés ;

- si , à un endroit du circuit , il n'y a plus contact , on n'est pas obligé pour autant de jeter la plaque et ses connexions , équivalents des plaquettes  des circuits imprimés habituels ; on ne jette alors que le module de jonction défaillant ;

- les montages ainsi réalisés comportent moins de fils de connexion , puisque l'on va directement de composant à composant ;

6

- on peut séparer les diverses fonctions d'un montage.

Ce qui précède concerne plus spécialement les plans de câblage , dits " monoface " ou " en simple face " .

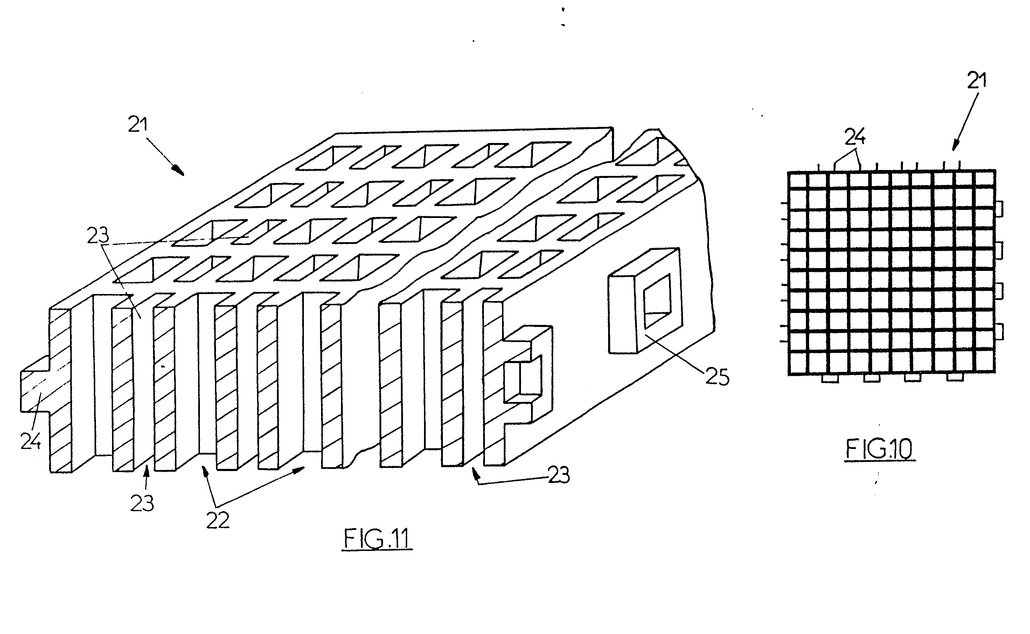

On a représenté sur les figures 10 à 26 , des varanites plus particulièrement prévues pour réaliser des plans de câblage en double face , c'est-à-dire tels que les constituants électroniques peuvent être disposés sur les deux faces d'une même plaque de support.

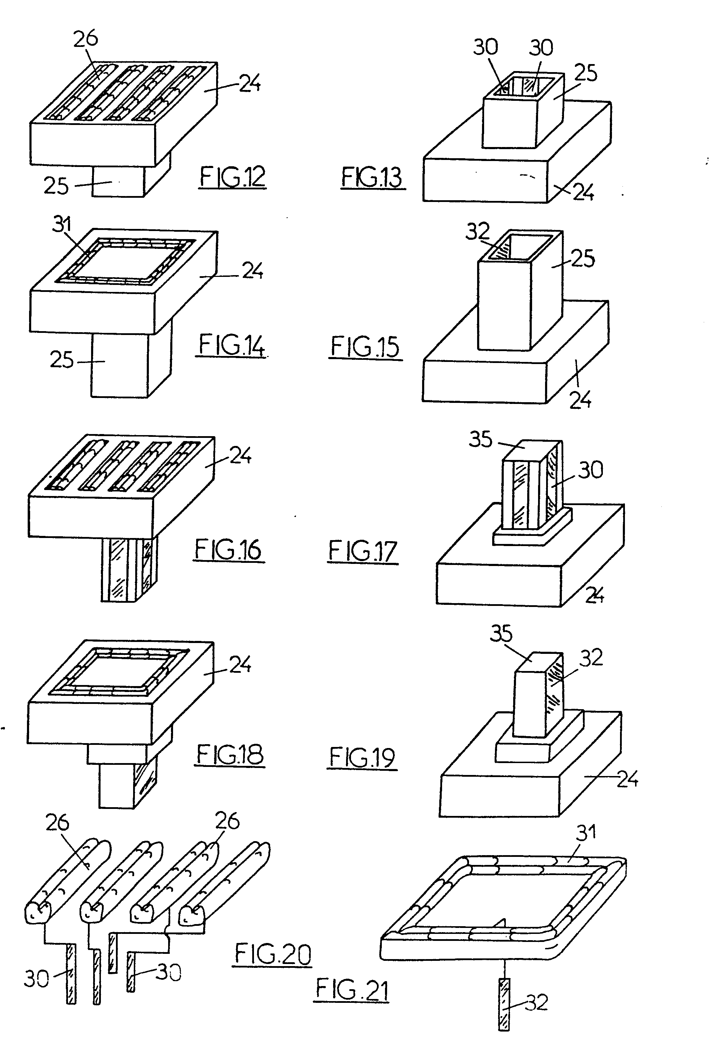

Une telle plaque 21 a été détaillée sur les figures 10 et 11 . Cette plaque peut être réalisée d'une pièce en matière moulée , et par exemple en matière plastique . Elle comporte des perforations carrées ou rectangulaires 22 , et des trous divers 23 , répartis en réseau sur ses deux faces . Enfin , sur les quatre côtés de sa périphérie , deux comportent des tenons mâles 24 dépassant vers l'extérieur , et les deux autres des manchons femelles 25 susceptibles de recevoir les tenons mâles 24 d'une autre plaque 1. On peut ainsi assembler côte à côte plusieurs plaques 1 selon l'invention.

Le module de jonction n° I illustré sur les figures 12 et 13 est d'une utilisation analogue à celui des figures 8 et 9 . Toutefois , il présente , par rapoort à celui-ci , les différences suivantes :

- chaque rangée de connexions 6 est remplacée par une barrette de connexion unique 26 s'étendant sur pratiquement toute la longueur de la tête du module ;

- l'ergot de fixation 25 est la fois carré et creux ;

- sur les faces internes de l'ergot creux 25 sont disposées quatre plaquettes conductrices 30 , réalisées par exemple en métal ; chacune de ces plaquettes est reliée à l'une des barrettes 26 sous la forme d'une armature métallique noyée dans la matière plastique du module 24 , 25 ( figures 12 , 13 et 20).

En ce qui concerne le module n° II illustré sur les figures 14 , 15 et 21 , il est d'un fonctionnement analogue au module illustré sur les figures 4 et 5 , avec toutefois les différences suivantes :

- ici encore , les connexions séparées 6 sont remplacées par une barrette ou rampe conductrice périphérique 31 , logée dans la tête 24 du module ;

- l'ergot 25 est la fois carré et creux ;

7

- sur l'une des faces intérieures de l'ergot creux 25 , se trouve encastrée une plaquette conductrice 32 , par exemple en métal; cette plaquette est reliée métalliquement à la rampe de connexion 31 avec laquelle elle forme une armature métallique noyée dans la matière plastique du module 24 , 25 ( figures 14 , 15 et 21).

Les modules n° I et II qui viennent d'être décrits aux figures 12 à 15 , et 20 , 21 , sont des modules femelles . Les modules mâles correspondants sont illustrés sur les figures 16 , 17 pour le module n° I , et 18 , 19 , pour le module n° II .

Pour ces derniers , la seule différence vient de ce que l'ergot 33 est la fois carré et plein , d'un dimensionnement qui lui permet de s'engager à frottement doux dans l'ergot creux 25 d'un des modules femelles précités.

Grâce à cette disposition , on voit sur la figure 24 , qu'il est possible d'enficher un module mâle 33 sur l'une des faces de la plaque de support 21 , tandis qu'un module femelle 34 est enfiché sur la face opposée , dans une même perforation , si bien que les éléments conducteurs 26 ou 31 du module mâle 33 sont raccordés électriquement aux éléments conducteurs 26 ou 31 du module femelle 34 . Le passage d'uneface à l'autre de la plaque de support 21 s'effectue grâce aux plaquettes intérieures 32 du tenon femelle de l'élément 34 , placées en contact avec les plaquettes équipant les tenons carrés mâles 35 ( plaquettes 30 ou 32) de chaque module mâle.33.

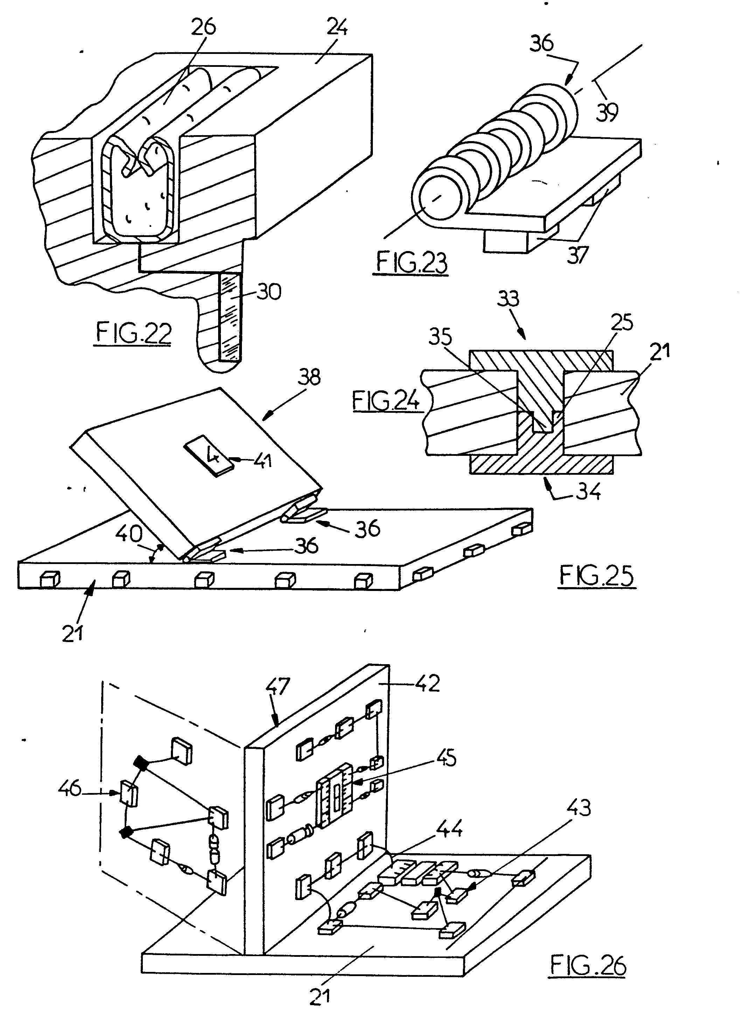

On a représenté sur la figure 23 une charnière 36 qui complète les éléments selon l'invention.

L'élément charnière 36 comporte deux ergots carrés 37 , dont les dimensions et l'écartement correspondent aux mailles du réseau de perforations de la plaque support 21 . Par conséquent , ces ergots 37 peuvent être enfichés ;

- soit dans les perforations 22 d'une plaque support 21 ou 38 ;
- soit dans les bossages creux 25 prévus sur la périphérie

Grâce à cette disposition , il suffit de relier par un axe 39 (figure 13) deux éléments de charnière 36 , pour pouvoir réaliser un montage du genre de celui qui apparaît sur la figure 25 . Dans ce cas , les charnières 36 permettent d'assurer la liaison entre une plaque support 21 et une autre plaque support analogue 38 , qui forment entre elles un angle quelconque 40 . Cela peut être commode , par exemple pour réaliser une sorte de pupître comportant des éléments d'affichage tels que 41 , faisant apparaître par exemple des chiffres électro-luminescents.

La figure 26 illustre une autre possibilité d'utilisation d'un nécessaire d'électronique selon l'invention . Dans ce cas , on a enfiché les tenons latéraux 24 ( figure 11) d'une plaque support 42 dans les perforations 22 ( figure 11) d'une autre plaque support 21 ( figure 26) . Sur la plaque support 42 , dont les deux faces sont ainsi accessibles , on peut réaliser avec les modules selon l'invention , divers montages de câblage électronique , et notamment :

- un étage 43 sur une partie de la face supérieure de la plaque support 21 ;

- relié à celui-ci par des fils le triques tels que 44 , un autre étage tel que 45 sur laface avant de la plaque support 42 ;

- en liaison avec ce dernier , un étage supplémentaire tel que 46 , représenté schématiquement sur la figure 26 , et situé en réalité sur laface arrière 47 dela plaque de support 42.

En définitive , on voit que les principaux avantages du dispositif selon l'invention sont les suivats :

- tous les éléments sont assemblables par enfichage , c'est-à-dire qu'il n'y a plus de soudure ;

- on peut réaliser des schémas prévus " en double face " , en respectant exactement les circuits dessinés de cette façon sur le papier;

- la réalisation en double face permet d'éviter une saturation rapide des plaquettes de support telles que 21 , 38 , 42 , etc..

- on peut , dans les montages , respecter exactement les schémas , même dans le cas du double face .

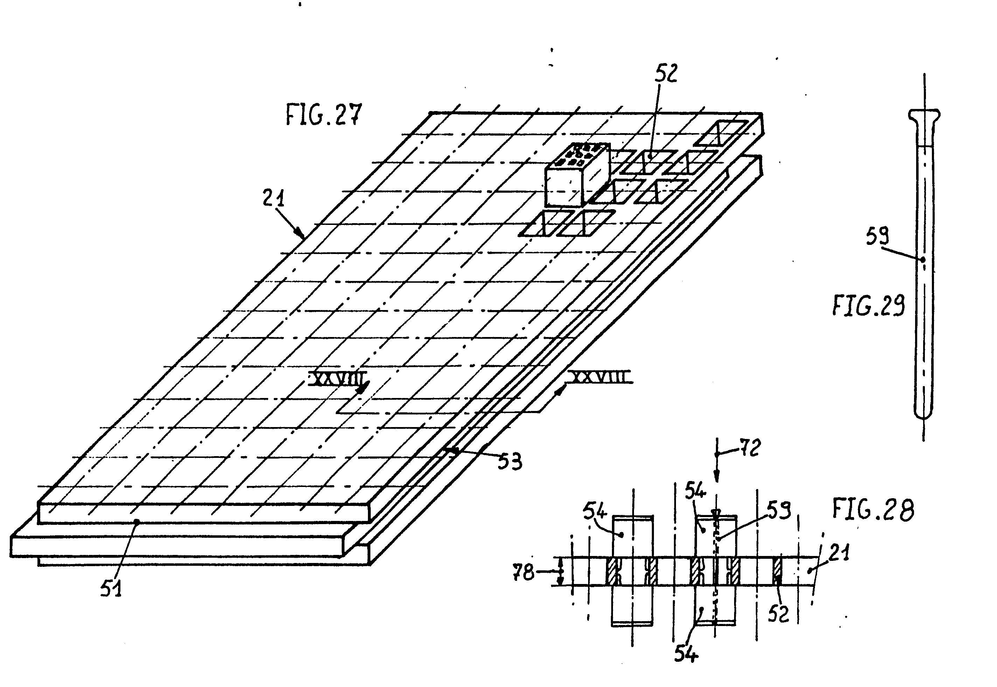

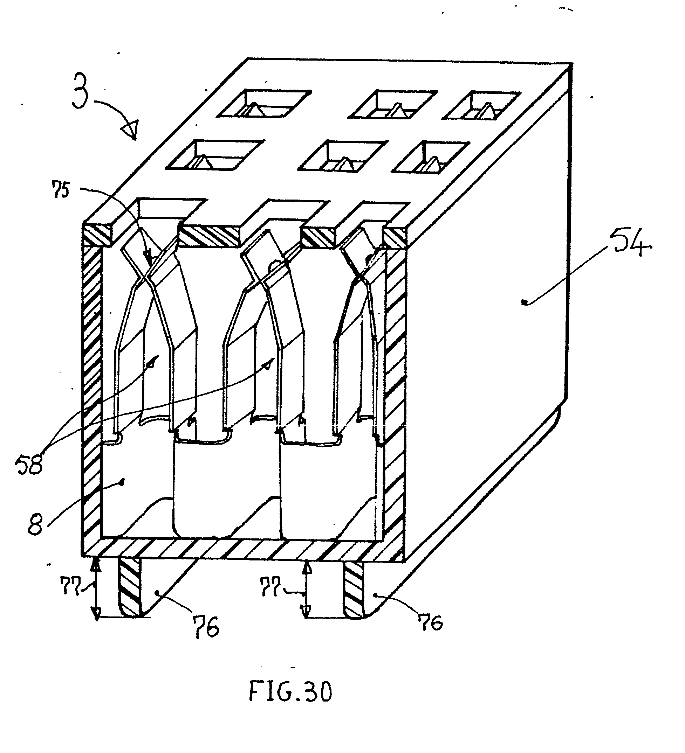

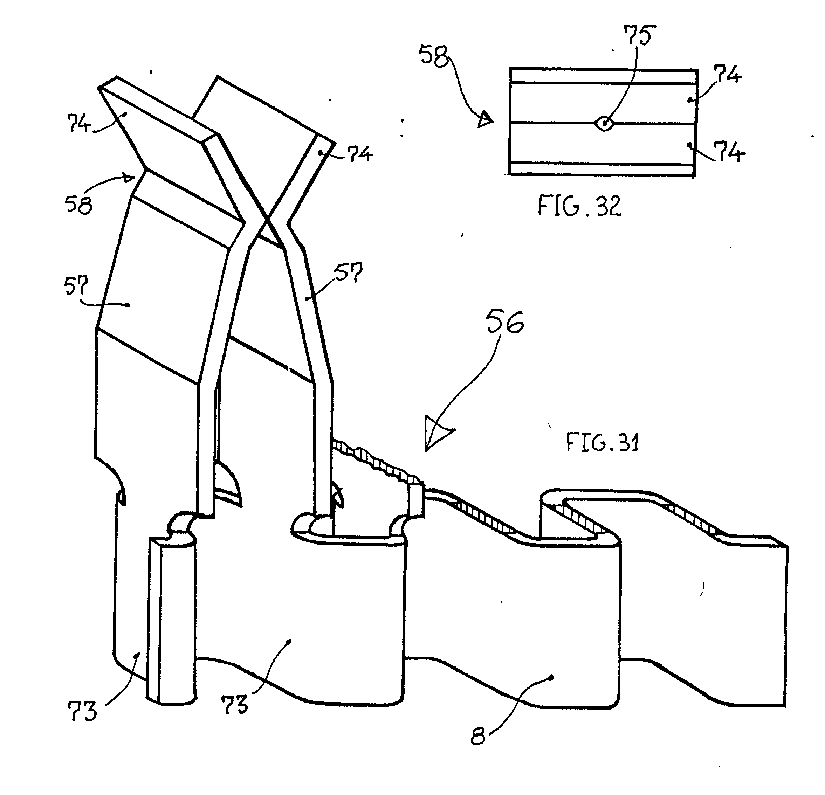

On a représenté sur les figures 28 à 32 , une variante qui convient spécialement pour des circuits à double face.

La plaque de support 21 est rectangulaire , percée sur toute son épaisseur par un réseau de perforations carrées 52 . Deux tenons longitudinaux en relief 51 équipent deux côtés consécutifs de la périphérie , alors que sur les deux autres côtés sont prévues des rainures longitudinales 53 . Cela permet de juxtaposer plusieurs plaques 21 analogues , tout en respectant le pas du réseau des perforations 52.

Chaque module correspondant 3 est réalisé d'une pièce en matière isolante ( figures 27 , 28 et 30) , de préférence dure . Il comporte une tête cubique 54 à l'intérieur de laquelle sont logées, côte à côte , mais sans liaison électrique entre elles , des barrettes métalliques de connexion 56. Chhacune d'elles comporte plusieurs pinces juxtaposées 458 , dont chacune est formée de deux languettes 57 déformables élastiquemnt . L'ensemble des languettes 57 est découpé d'une pièce avec le culot 8 qui se présente sous la forme d' une bande à allure sinusoïdale . Autrement dit , si l'on introduit une broche métallique 59 entre les deux lamelles 57 d'une pince 58 (figure 28 , flèche 72) , la broche 9 peut traverser complètement le culot 8 en passant entre les deux branches 73 de l'ondulation correspondante.

Enfin , on remarque que les lamelles 57 définissent pour une pince 58 , une embouchure évasée 74 , munie d'une encoche 75 disposée près du centre . Cette disposition permet de guider un fil ou une broche 59 lorsqu'on l'introduit dans la pince 58 . De plus , les encoches sont décalées vers les extrémités pour les pinces 58 extrêmes d'une même barrette 56 , de façon que , lorsque les modules 3 , 54 sont adaptés sur la plaque 21 ( figure 27) , les encoches 75 soient réparties régulièrement selon les sommets d'un réseau à mailles carrées.

Sous la tête cubique 54 , chaque module comporte un ergot formé de deux nervures latérales 76 dont la hauteur 77 est inférieure ou égale à la moitié de l'épaisseur 78 de la plaque 21.

Ainsi , si les deux modules sont fixés dans une même perforation 52 ( figure 28) avec leurs têtes cubiques 54 situées de part et d'autre de la plaque 21 , il suffit de les traverser tous deux de part en part par une broche 59 engagée suivant la direction de la flèche 72 , pour assurer la liaison électrique.

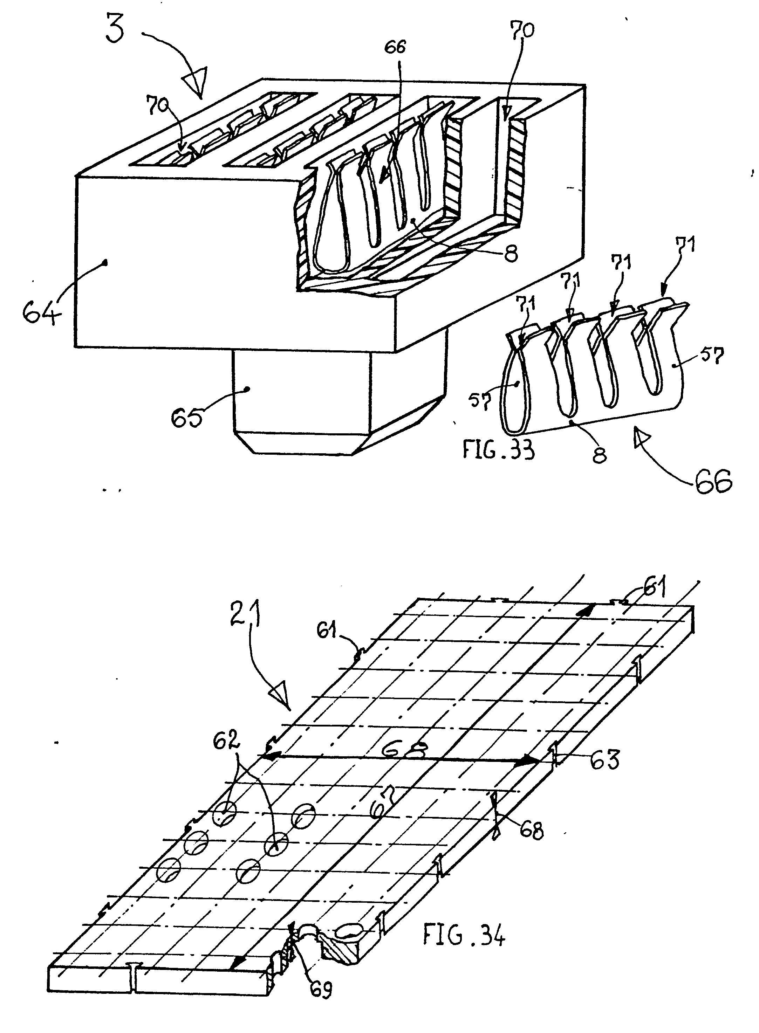

On a représenté sur les figures 33 et 34 , une variante particulièrement intéressante pour réaliser des circuits en simple face .

Dans ce cas , la plaque perforée 21 comporte des perforations 62 qui sont de forme circulaire . Sur la périphérie de cette plaque rectangulaire sont prévus :

- sur deux côtés consécutifs , des tenons en queue d'aronde 61 faisant saillie ;

_ sur les deux autres côtés , des mortaises en queue d'aronde 63 à profil correspondant.

10

De plus , la longueur 67 de la plaque 21 est un multiple de sa largeur ( par exemple le double) . Enfin , le pas du réseau prévu pour les lignes et les colonnes des perforations circulaires 62 , reste respecté en passant d'une plaque 21 à une autre plaque voisine analogue , assemblée par les tenons et mortaises 61 , 63.

La plaque 21 présente sur sa périphérie une épaisseur 68 préférablement double de l'épaisseur 69 de sa partie centrale.

Chaque module 3 correspondant est réalisé d'une pièce (figure 33) en une matière plastique souple . Sa tête cubique 64 est creusée de quatre fentes rectilignes 70 parallèles entre elles . Dans chacune d'elles , on enfonce à force une barrette métallique de connexion 66 à plusieurs pinces 71 juxtaposées , par exemple au nombre de quatre . L'ensemble de la barrette 66 est réalisé à partir d'une plaquette en tôle de cuivre , découpée et pliée pour définir quatre paires de lamelles 57 reliées à leur base par un plot transversal commun 8 .

L'ergot 65 du module a la forme d'un prisme carré en matière souple , si bien que son enfoncement dans une perforation circulaire 62 s'effectue à force , par déformation de la matière dans les angles du carré.

Bien entendu , chaque pince 71 peut posséder une entrée évasée 74 et une encohe 75 du genre prévu pour les pinces 58 précitées.

## REVENDICATIONS

1 - Nécessaire pour la réalisation de circuits électriques , comprenant une plaque perforée (21) et des modules de jonction (3) se fixant sur la plaque de façon amovible , la tête (4), (24) , (54) , ou (64) de chaque module de jonction (3) étant limitée par deux plans parallèles , alors qu'en dessous se trouve un ergot (5) , (25) , (35) , (55) ou (65) maintenant par frottement le module de jonction (3) dans un des trous (2) , (22) ou (52) de la plaque (21) , caractérisé en ce que la tête ( 4) , (24) , (54) ou (64) des modules de jonction (3) est en un matériau isolant et comporte un réseau de connexions conductrices de l'électricité régulièrement espacées et placées à une distance constante du bord de la surface supérieure de la tête (4) , (24) , (54) ou (64).

2 - Nécessaire suivant la revendication 1 , caractérisé en ce que la tête (4) , (24) , (54) ou (64) des modules de jonction (3) est de forme prismatique sensiblement carrée.

3 - Nécessaire suivant la revendication 1 , caractérisé en ce que les connexions précités sont toutes reliées par un même conducteur (9) ou (31) décrivant une ligne continue suivant sensiblement la forme du réseau de connexions ( figures 4 , 18 et 21).

4 - Nécessaire suivant la revendication 1 , caractérisé en ce que la tête (4) , (24) , (54) ou (64) des modules de jonction (3) comporte un réseau de connexions (9) , (26) , (56) ou (66) régulièrement réparties suivant des parallèles à un des côtés de la tête, dans le cas où cette tête a la forme d'un parallélépipède ou d'un cube (figures 8 , 16 , 20 , 27 et 33).

5 - Nécessaire suivant la revendication 4 , caractérisé en ce que les connexions (9) , (26) , (56) ou (66) appartenant à une mê· parallèle sont reliées par un même conducteur , ces conducteurs formant un ensemble de parallèles non reliées entre elles par un autre conducteur (figures 8 , 16 , 20 , 28 et 33).

6 - Nécessaire suivant l'une quelconque des revendications prédédentes, caractérisé en ce qu'une connexion se compose d' au moins deux lamelles métalliques (7) ou (57), reliées à un plot (8).

7 - Nécessaire suivant la revendication 6 , caractérisé en ce que le plot (8) est relié au conducteur précité (9) de sorte que l' ensemble " lamelles (7) , plot (8) , conducteur (9) " ,permette le passage du courant électrique.

8 - Nécessaire suivant l'une quelconque des revendications précédentes , caractérisé en ce que la forme des lamelles (7) d'une connexion doit permettre une fixation correcte des composants électroniques , propre à assurer le contact électrique entre ces composants et la connexion.

9 - Nécessaire suivant l'une quelconque des revendications précédentes , caractérisé en ce que les liaisons des lamelles (7),du plot (8) et du conducteur (9) sont réalisées par soudage, ou pliage , ou emboutissage.

10 - Nécessaire suivant la revendication 1 , caractérisé en ce que la plaque de support (21) est en matière moulée , comportant des perforations (22) carrées ou rectangulaires , réparties en réseau sur ses deux faces.

11 - Nécessaire suivant la revendication 10 , caractérisé en ce que sur les quatre côtés de la périphérie d'une plaque de support (21) , deux comportent des tenons mâles (24) dépassant vers l'extérieur et les deux autres , des manchons femelles (25) susceptibles de recevoir les tenons mâles (24) d'une autre plaque.

12 - Nécessaire suivant l'une quelconque des revendications précédentes , caractérisé en ce que sur la tête(4) d'un module de jonction (3) sont disposées plusieurs paires de barrettes de connexions (26) parallèles entre elles , chacune s'étendant sur pratiquement toute la longueur de la tête (24) du module et étant reliée par des moyens conducteurs , à une plaquette (30) portée par ergot , ces différentes paires de plaquettes (30) étant réparties sur la périphérie dudit ergot (25).

13 - Nécessaire suivant l'une quelconque des revendications 1 à 11 , caractérisé en ce que , dans la tête (24) d'un module de jonction est logée une barrette (31) ou rampe conductrice périphérique , électriquement reliée à une plaquette conductrice (32) portée par l'ergot (25).

14 - Nécessaire suivant l'une quelconque des revendications précédentes , caractérisé en ce que l'ergot (25) , (35) d' un module est plein , à section carrée ,la ou les plaquettes conductrices (30) , (32) , étant réparties sur sa périphérie extérieure.

15 - Nécessaire suivant l'une quelconque des revendications 1 à 13 , caractérisé en ce que l'ergot (25) d'un module (3) est creux , à section carrée , la ou les plaquettes (32) qui l'équipent étant disposées sur sa ou ses faces intérieures.

16 - Nécessaire suivant l'une quelconque des reven-

13

dications 14 ou 15 , caractérisé en ce que , les modules (3) se trouvant classés en modules mâles (ergots pleins) et modules femelles (ergots creux) sont dimensionnés en longueur et en section de façon qu'un module mâle , enfiché sur une face d'une plaquette de support (1) ou (21) , dans une perforation (2) , (22) , (52) ou (62) de celle-ci , puisse être simultanément enfiché dans l'ergot creux (25) d'un module femelle disposé en vis-à-vis , dans la même perforation sur l'autre face de la même plaque de support (1) ou (21) , ce qui permet des câblages en double face.

17 - Nécessaire suivant l'une quelconque des revendications précédentes , caractérisé en ce qu'il comprend un élément charnière (36) muni de deux ergots carrés (37) dont les dimensions et l'écartement correspondent aux mailles du réseau de perforations (2) , (22) , (52) ou (62) d'une plaque de support (1) ou (21) , si bien qu'il peut être enfiché :
  - soit dans les perforations d'une plaque de support (1) ou (21) ;
  - soit dans les bossages creux prévus sur sa périphérie.

18 - Nécessaire suivant l'une quelconque des revendications précédentes , caractérisé en ce qu'un module (3) se présente sous la forme d'une tête cubique (54) en matière plastique souple, dans laquelle sont prévues plusieurs fentes (70) rectilignes et parallèles entre elles , débouchant vers le haut , chacune d'elles contenant une barrette métallique de connexion (66) à plusieurs pinces (71) juxtaposées , chaque barrette (66) étant enfoncée à force dans la fente correspondante (70) de la tête souple (64).

19 - Nécessaire suivant la revendication 18 , caractérisé en ce que l'ergot (65) de chaque module est un tronc prismatique carré , réalisé en matière souple , qu'on enfonce à force dans des perforations circulaires (62) réparties régulièrement en lignes et en colonnes sur la plaque (21).

20 - Nécessaire suivant l'une quelconque des revendications précédentes , caractérisé en ce que la tête cubique (54) de chaque module (3) possède deux nervures inférieures (76) dont l'ensemble constitue l'ergot d'encastrement , susceptible de venir s'emboîter dans une perforation carrée (52) de la plaque (21) , en y pénétrant d'une hauteur (77) inférieure ou égale à la moitié de l'épaisseur (78) de la plaque (21) , si bien que celle-ci peut recevoir sur ses deux faces , des modules (3) , (54) , (76) , fixés à tout emplacement voulu.

21 - Nécessaire suivant la revebdication 20 , caractérisé en ce que chaque barrette de connexion (56) comporte plusieurs pinces (58) juxtaposées et solidaires d'un culot (8) ayant la forme d'une bande sensiblement sinusoïdale dont deux branches (73) sont situées à la base et de part et d'autre de chaque pince (58).

22 - Nécessaire suivant l'une quelconque des revendications 18 à 21 , caractérisé en ce que les lamelles (57) de chaque pince (58) ou (71) possède une embouchure évasée (74) munie près de son centre d'une enooche (75) facilitant le guidage d'introduction d'un fil ou d'une broche (59).

23 - Nécessaire suivant l'une quelconque des revendications 18 à 22 , caractérisé en ce qu'il comprend au moins une broche métallique (59) susceptible d'être engagée à travers toute la hauteur de deux modules (3) logés de part et d'autre de la plaque de support (21) dans une même perforation (52) pour établir la liaison électrique entre les deux pinces (58) correspondantes situées sur chacune des deux faces de la plaque (21).

FIG.1

FIG.2

FIG.3

FIG.4

FIG.8

FIG.5

FIG.9

FIG.6    FIG.7

FIG.11

FIG.10

26

24

25

FIG.12

30    30    25

FIG.13    24

31

24

25

FIG.14

32    25

FIG.15    24

24

FIG.16

35    30

FIG.17    24

24

FIG.18

35    32

FIG.19    24

26    26

30    30

FIG.20

31

FIG.21    32

0088855

PL.5/9

FIG.22

FIG.23

FIG.24

FIG.25

FIG.26

FIG.27

52

21

FIG.29

59

XXVIII

XXVIII

53

51

72

54

54

53

54

78

52

21

54

FIG.28

PL.6/9

0088855

3

75

58

8

54

77

77

76

76

FIG.30

0088855

FIG.32

75

74

74

58

FIG.31

56

74

57

58

57

74

8

73

73

PL.9/9

FIG.33

FIG.34

Office européen
des brevets

**RAPPORT DE RECHERCHE EUROPEENNE**

0088855
Numéro de la demande

EP 82 42 0033.1

| | DOCUMENTS CONSIDERES COMME PERTINENTS | | | CLASSEMENT DE LA DEMANDE (Int. Cl. 3) |
|---|---|---|---|---|
| Catégorie | Citation du document avec indication, en cas de besoin, des parties pertinentes | | Revendication concernée | |
| Y | US - A - 3 805 116 (E. NEHMANN) * colonne 1, lignes 29 à 50 * | | 1.,3,4 6-10 | G 09 B 23/18 |
| | & FR - A - 2 169 983 | | 18 | |
| | -- | | | |
| Y | CH - A5 - 585 942 (A. STREIFF) * colonne 1, lignes 24 à 38 * | | 1,3,4 6-10 | |
| | ---- | | 18 | |

**DOMAINES TECHNIQUES RECHERCHES (Int. Cl. 3)**

G 09 B 23/18
H 05 K 7/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| Berlin | 14-10-1982 | BOTTERILL |

OEB Form 1503.1 06.78